(19) **Europäisches Patentamt / European Patent Office / Office européen des brevets**

(11) **EP 3 006 106 B1**

(12) **EUROPEAN PATENT SPECIFICATION**

(45) Date of publication and mention of the grant of the patent:
**06.02.2019 Bulletin 2019/06**

(51) Int Cl.:
*C22C 5/04* (2006.01)     *H01M 8/1004* (2016.01)
*H01M 8/1011* (2016.01)     *H01M 4/92* (2006.01)

(21) Application number: **14803552.0**

(22) Date of filing: **27.05.2014**

(86) International application number:
**PCT/JP2014/063935**

(87) International publication number:
**WO 2014/192728 (04.12.2014 Gazette 2014/49)**

(54) **CATALYST PARTICLES, SUPPORT-TYPE CATALYST PARTICLES, AND USE THEREOF**

KATALYSATORPARTIKEL, TRÄGER-KATALYSATORPARTIKEL UND DEREN VERWENDUNG

PARTICULES DE CATALYSEUR, PARTICULES DE CATALYSEUR DU TYPE À SUPPORT ET LEUR UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2013 JP 2013110710**

(43) Date of publication of application:
**13.04.2016 Bulletin 2016/15**

(73) Proprietor: **Showa Denko K.K.**
**Tokyo 105-8518 (JP)**

(72) Inventors:
• **ZHU, Kunning**
  **Tokyo 105-8518 (JP)**
• **KITAGAWA, Tomoya**
  **Tokyo 105-8518 (JP)**
• **LEE, Kunchan**
  **Tokyo 105-8518 (JP)**
• **KUSAKA, Masabumi**
  **Tokyo 105-8518 (JP)**
• **MORIYA, Toshinori**
  **Tokyo 105-8518 (JP)**

(74) Representative: **Strehl Schübel-Hopf & Partner**
**Maximilianstrasse 54**
**80538 München (DE)**

(56) References cited:
**WO-A1-2009/104500**    **WO-A1-2012/098712**
**JP-A- 2002 352 806**    **JP-A- 2010 088 981**

• **KADIRGAN F ET AL: "Preparation and characterization of nano-sized Pt-Pd/C catalysts and comparison of their electro-activity toward methanol and ethanol oxidation", INTERNATIONAL JOURNAL OF HYDROGEN ENERGY, vol. 34, no. 10, 10 April 2009 (2009-04-10), pages 4312-4320, XP028899016, ISSN: 0360-3199, DOI: 10.1016/J.IJHYDENE.2009.03.024**

• **F. KADIRGAN ET AL.: 'Preparation and characterization of nano-sized Pt-Pd/C catalysts and comparison of their electro- activity toward methanol and ethanol oxidation' INTERNATIONAL JOURNAL OF HYDROGEN ENERGY vol. 34, no. 10, 10 April 2009, pages 4312 - 4320, XP028899016 DOI: 10.1016/J.IJHYDENE.2009.03.024**

• **W. LI ET AL.: 'Liquid-solid heterogeneous synthesis of highly dispersed and PdPt surface enriched PdPtCu/C as methanol tolerant oxygen reduction reaction catalysts' APPLIED CATALYSIS B: ENVIRONMENTAL vol. 129, 01 January 2013, pages 426 - 436, XP055296796 DOI: 10.1016/J.APCATB.2012.09.044**

• **Z.-Z. JIANG ET AL.: 'Effects of anatase TiO2 with different particle sizes and contents on the stability of supported Pt catalysts' JOURNAL OF POWER SOURCES vol. 196, no. 20, 01 January 2011, pages 8207 - 8215, XP055296798 DOI: 10.1016/J.JPOWSOUR.2011.05.063**

**Description**

Technical Field

The present invention relates to support-type catalyst particles, and uses thereof, and more specifically relates to a support-type catalyst particle that are useful for an oxygen reduction catalyst for an electrode for a fuel cell, and uses thereof.

Background Art

A fuel cell is an energy conversion device that directly converts chemical energy into electric energy and includes at least a solid or liquid electrolyte as well as an anode and a cathode which are two electrodes inducing a desired electrochemical reaction.

There are various kinds of fuel cells according to the kind of an electrolyte used. A polymer electrolyte fuel cell (PEFC: Polymer Electrolyte Fuel Cell) which is one kind of the fuel cells employs a solid polymer electrolyte membrane as an electrolyte membrane, has the merits of rapidly starting and of having a low operating temperature of 80 to 100°C, and receives attention as a stationary power source or an automotive power source.

A direct liquid fuel cell such as a direct methanol fuel cell (DMFC: Direct Methanol Fuel Cell) which is one kind of such polymer electrolyte fuel cells employs a liquid such as methanol as a fuel and is expected to be used as a small, transportable or portable power source because of having a high volume energy density.

A platinum catalyst having a high oxygen reduction activity has been used as a cathode catalyst for a direct methanol fuel cell. However, the limited supply and high price of platinum has become stumbling blocks for the practical and widespread use of a direct methanol fuel cell.

Further, in a direct methanol fuel cell, methanol which is a liquid fuel is supplied directly to an anode and oxygen is supplied to a cathode, whereby methanol is oxidized in the anode and oxygen is reduced in the cathode to enable electric energy to be taken to the outside; however, a phenomenon in which methanol penetrates a polymer electrolyte membrane and moves from the anode to the cathode ("crossover of methanol") and methanol reaching the cathode is oxidized directly in the cathode occurs when the direct methanol fuel cell is operated. As a result, a site in which methanol is oxidized on the cathode is not able to be utilized for electrochemical reduction by oxygen any more. Therefore, a problem that the total activity of the cathode is decreased, the electrochemical potential of the cathode is decreased, and the energy conversion efficiency of the fuel cell is significantly decreased occurs. Therefore, it is desired that a cathode catalyst used in a direct methanol fuel cell is inert or has a low activity in view of oxidation of methanol.

As for a cathode catalyst used in DMFC, Patent Literature 1 indicates calculation results of hydrogen bonding strength and oxygen bonding strength of a catalyst particle comprising an alloy of two or more selected from Pt, Pd, and the like, and says based on the calculation results that the catalyst particle has a low methanol oxidation activity while having a high oxygen reduction activity. In addition, it is described that the proportion of each metal component is preferably 10 to 90 atomic%.

Patent Literature 2 also discloses a catalyst comprising an alloy of Pt and Pd, and says that such a catalyst particle has a low methanol oxidation activity while having a high oxygen reduction activity.

In addition to the catalysts, a fuel cell electrode catalyst comprising Pt and Pd, which is not a catalyst specialized for use in a cathode for a direct methanol fuel cell, has been conventionally known. For example, Patent Literature 3 discloses a cathode catalyst for a polymer electrolyte fuel cell, comprising an alloy of platinum, palladium, and the like as well as conductive carbon on which the alloy is supported, and says that, e.g., an atomic ratio of platinum, palladium, and the like is preferably 50:50 to 90:10 from the viewpoint of exhibiting an excellent oxygen reduction activity ([0012], [0020], and the like).

Patent Literature 4 discloses a fuel cell electrode catalyst comprising at least an electrode catalyst in which a platinum particle is supported on a conductive support and an electrode catalyst in which a platinum alloy particle is supported on a conductive support is disclosed, and says that examples of the platinum alloy particle include an alloy particle of a metal, such as palladium, and platinum and the composition of the platinum alloy particle preferably includes 30 to 90 atom% of platinum and 10 to 70 atom% of metal ([0012], [0019], and the like).

Patent Literature 5 discloses a binary alloy fine particle having a composition represented by:

$$C_xD_y$$

wherein C and D are noble metals selected from Pt, Pd, and the like; C ≠ D; and 20 at% ≤ x ≤ 80 at%, and 20 at% ≤ y ≤ 80 at% hold, as a catalyst used in an methanol electrode for a methanol fuel cell, and discloses, as a specific example thereof, a binary alloy fine particle having a composition represented by Pt48Pd52 ([0009], [0044], and the like).

Patent Literature 6 discloses a supported catalyst for a fuel cell, having a layer structure in which a carbon-based support, a metal oxide particle, and a catalytic metal particle are sequentially layered, is disclosed, and says that examples of the catalytic metal particle include a particle of an alloy of a main metal catalyst such as Pt and an auxiliary catalytic metal such as Pd, and that the atomic ratio between the main metal catalyst such as Pt and an auxiliary catalytic metal such as Pd is desirably 9:1 to 1:9 ([0009], [0024] to [0026], and the like) .

Citation List

Patent Literature

**[0013]**

　Patent Literature 1: U.S. Patent Application Publication No. 2004/0161641
　Patent Literature 2: JP-A 2010-536548
　Patent Literature 3: JP-A 2006-92957
　Patent Literature 4: JP-A 2006-79840
　Patent Literature 5: JP-A 2003-226901
　Patent Literature 6: JP-A 2008-27918

Kadirgan et al. (INTERNATIONAL JOURNAL OF HYDROGEN ENERGY, vol. 34, 2009, pages 4312-4320) discloses a Pt-Pd/C catalyst for direct alcohol fuel cells with a surface ratio of Pt:Pd=1:1.
WO 2012/098712 A1 discloses a Pt-Pd/TiFeCNO catalyst for direct alcohol fuel cells (example 12). Pt and Pd are brought onto TiFeCNO at 80°C for 2.5hours. The current density at 0.30V/A.cm 2 is 0.092 (Tab. 3).

Summary of the Invention

Technical Problem

The present invention is directed at further enhancing an oxygen reduction activity while suppressing a methanol oxidation activity in a catalyst particle comprising Pt and Pd that can be used as a cathode catalyst for a fuel cell.
In other words, an objective of the present invention is to provide a support-type catalyst particle that has a very high oxygen reduction activity and a low methanol oxidation activity and comprises Pt and Pd.

Solution to Problem

As a result of extensive research, the present inventors found that when the ratio between Pt and Pd in the surface of a catalyst particle that is supported on a conductive particle and comprises Pt and Pd is in a specified range, the oxygen reduction activity of the catalyst particle is specifically high and the methanol oxidation activity thereof is low. The present invention was thus accomplished.
The present invention is defined in the claims. Furthermore, the present disclosure relates to, for example, the following [1] to [23]:

　[1] A catalyst particle comprising platinum and palladium, and having a proportion of palladium in the surface of the particle, measured by X-ray photoelectron spectroscopy (XPS), of 45 to 55 atom% with respect to a total amount of platinum and palladium of 100 atom%.
　[2] The catalyst particle according to the above [1], having a value of 25 atom% or less, the value obtained by subtracting the proportion (atom%) of palladium in the surface of the catalyst particle from a proportion (atom%) of palladium contained in the catalyst particle, as measured by inductively coupled plasma atomic emission spectroscopy (ICP-AES), with respect to a total amount of platinum and palladium, contained in the catalyst particle, of 100 atom%.
　[3] The catalyst particle according to the above [1] or [2], having 1 to 20 nm of an average particle size.
　[4] A support-type catalyst particle comprising the catalyst particle according to any one of the above [1] to [3], and a support on which the catalyst particle is supported.
　[5] The support-type catalyst particle according to the above [3], wherein the content of the catalyst particle is 1 to 80 mass% with respect to a total amount of the catalyst particle and the support of 100 mass%.
　[6] The support-type catalyst particle according to the above [4] or [5], wherein the support is a conductive particle.
　[7] The support-type catalyst particle according to any one of the above [4] to [6], wherein the support comprises at least one selected from the group consisting of a conductive carbon and a metal oxycarbonitride.
　[8] The support-type catalyst particle according to the above [7], wherein $0.01 \leq x \leq 2$, $0.01 \leq y \leq 2$, and $0.01 \leq z \leq$

3 hold when the composition of the metal oxycarbonitride is represented by $MC_xN_yO_z$, wherein M is a metal element.

[9] The support-type catalyst particle according to [7] or [8], wherein the metal oxycarbonitride is a titanium oxycarbonitride.

[10] The support-type catalyst particle according to any one of the above [4] to [6], wherein

the support comprises a conductive carbon and a metal oxide;

the metal oxide is a particle having a crystallite size of 20 to 500 nm, calculated by Scherrer equation: $D = K\lambda/B\cos\theta$, based on a peak with a maximum peak height observed in powder XRD measurement using a Cu-K$\alpha$ ray, wherein D is a crystallite size (nm), the constant K is 0.89, $\lambda$ is the wavelength (nm) of the Cu-K$\alpha$ ray, B is the peak half height width of the peak, and $\theta$ is the diffraction angle (°) of the peak; and

the support-type catalyst particle has a BET specific surface area of 150 to 1000 $m^2/g$.

[11] The support-type catalyst particle according to the above [10], wherein a metal element in the metal oxide is at least one metal element selected from the group consisting of the elements of Groups 4, 5, and 14 of the periodic table, and aluminum.

[12] The support-type catalyst particle according to the above [11], wherein the metal element is titanium.

[13] The support-type catalyst particle according to any one of the above [7] to [12], wherein the conductive carbon has a BET specific surface area of 150 to 2000 $m^2/g$.

[14] The support-type catalyst particle according to any one of the above [4] to [13], having a proportion of a conductive carbon to a portion of 50 to 90 mass%, the portion obtained by excluding the catalyst particle from the support-type catalyst particle.

[15] The support-type catalyst particle according to any one of the above [4] to [14], which is a cathode catalyst for a fuel cell.

[16] A fuel cell catalyst layer comprising the support-type catalyst particle according to any one of the above [4] to [15] .

[17] An electrode comprising the fuel cell catalyst layer according to the above [16] and a porous support layer.

[18] A membrane electrode assembly comprising a cathode, an anode, and an electrolyte membrane placed between the cathode and the anode, wherein the cathode is the electrode according to the above [17].

[19] A fuel cell comprising the membrane electrode assembly according to the above [18].

[20] The fuel cell according to the above [19], which is a polymer electrolyte fuel cell.

[21] The fuel cell according to the above [20], which is a direct liquid fuel cell.

[22] The fuel cell according to the above [21], which is a direct methanol fuel cell.

[23] An article with at least one function selected from the group consisting of electricity generating functions, light emitting functions, heat generating functions, sound generating functions, movement functions, display functions, and charging functions, the article comprising the fuel cell according to any one of the above [19] to [22].

Advantageous Effects of Invention

The support-type catalyst particle according to the present invention is used to thereby enable the obtainment of a cathode for a fuel cell, having a very high oxygen reduction activity and a low methanol oxidation activity, and the like.

Brief Description of Drawings

Figure 1 is a graph indicating the relationships between the proportions of Pd in the surfaces of catalyst particles produced in examples and comparative examples and the oxygen reduction activities (standardized current density ik) of electrodes in which the catalyst particles are used.

Figure 2 is a graph indicating comparative evaluations of the oxygen reduction activities of catalyst particles produced in Example 1 and Comparative Example 6 in cases in which methanol is and is not present in an aqueous solution of sulfuric acid, respectively.

Description of Embodiments

[Catalyst Particles and Support-Type Catalyst Particles]

<Catalyst Particles>

The catalyst particle is a catalyst particle for an oxygen reduction reaction, comprising platinum and palladium, wherein the proportion of palladium is 45 to 55 atom%, preferably 47 to 54 atom%, with the proviso that the total amount of platinum and palladium in the surface of the catalyst particles is 100 atom%. The amount of platinum and palladium in the surface of the catalyst particle is measured by X-ray photoelectron spectroscopy (XPS). XPS is capable of sensing an atom present in a catalyst surface (at several nm from a surface) based on the measurement principle thereof, and "the amount of platinum and palladium in the surface of a catalyst particle" in the present invention represents a value measured by X-ray photoelectron spectroscopy (XPS).

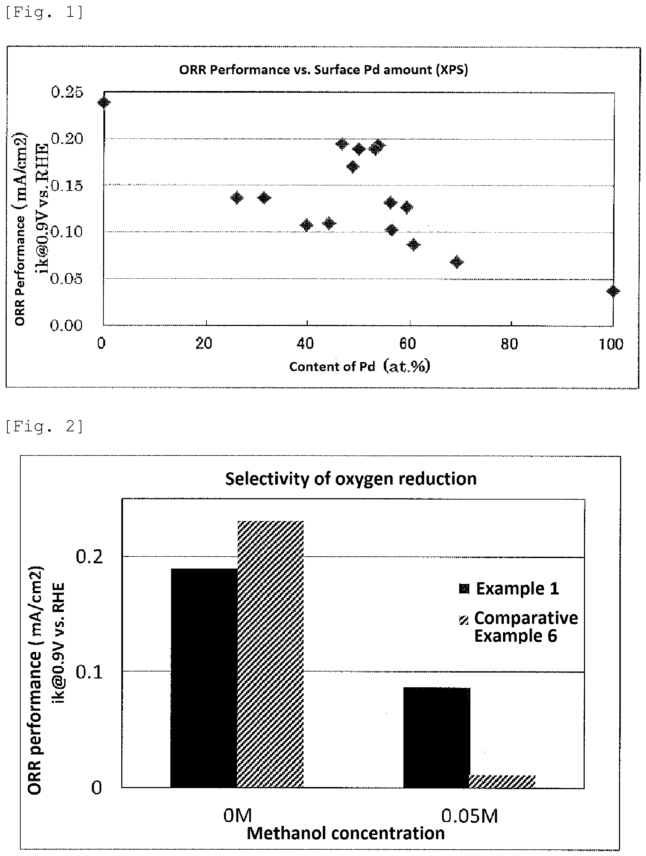

The oxygen reduction activity of a catalyst particle containing platinum and palladium tends to be decreased with increasing the proportion of palladium in the surface of the catalyst particle, as indicated in Figure 1. However, the catalyst particle exhibits a specifically high oxygen reduction activity when the proportion of palladium is in the above range. Thus, the catalyst particle according to the present invention has an advantage in view of a cost since a high oxygen reduction activity equivalent to that of a catalyst particle comprising only platinum can be realized while suppressing the amount of platinum used.

The catalyst particle according to the present invention has a low methanol oxidation activity although having a high oxygen reduction activity. Therefore, a high oxygen reduction activity of a cathode can be realized while suppressing decrease in cathode activity due to crossover of methanol by using the catalyst particle according to the present invention as a catalyst for a cathode for a direct liquid fuel cell such as DMFC, particularly a direct methanol fuel cell. A catalyst particle in which the proportion of palladium is low (i.e., a catalyst particle in which the proportion of platinum is around 100 atom%) exhibits a high oxygen reduction activity as well as a high methanol oxidation activity.

The catalyst particle surface substantially consists of platinum and palladium, and the proportion of the elements other than platinum and palladium contained in the catalyst particle surface is preferably 0 to 0.2 atom% with respect to a total of 100 atom% of all the elements constituting the catalyst particle surface.

The proportion of each element in the catalyst particle surface described above is a proportion as measured by X-ray photoelectron spectroscopy (XPS) adopted in examples mentioned later or a similar method.

The difference between the proportion (atom%) of palladium contained in the whole catalyst particle, measured by inductively coupled plasma atomic emission spectroscopy (hereinafter referred to as "ICP-AES"), with the proviso that the total amount of platinum and palladium contained in the whole catalyst particle is 100 atom%, and the proportion (atom%) of palladium in the surface of the catalyst particle mentioned above (hereinafter referred to as "difference between Pd proportions") is preferably 25 atom% or less, more preferably 20 atom% or less, still more preferably 15 atom% or less. When the difference between Pd proportions is the range, the catalyst particle has a higher oxygen reduction activity. The difference between Pd proportions is expressed by a mathematical expression as described below.

Difference between Pd proportions = proportion (atom%) of Pd in whole particle - proportion (atom%) of Pd in the surface

The average particle size of the catalyst particle is preferably 1 nm or more, still more preferably 3 nm or more, from the viewpoint of easy production, and preferably 20 nm or less, still more preferably 15 nm or less, from the viewpoint of a high oxygen reduction activity.

The average particle size is the average value of crystallite sizes in the direction perpendicular to the crystal planes of the catalyst particle, calculated by powder X-ray diffraction Rietveld analysis program adopted in the examples mentioned later, or a particle size as measured by a similar method.

<Support-Type Catalyst Particles>

The support-type catalyst particle according to the present invention is a particle in which the above-mentioned catalyst particle is supported on a support.

The proportion of the catalyst particle in the support-type catalyst particle is preferably 1 to 80 mass%, more preferably 5 to 70 mass%, still more preferably 10 to 60 mass%, with the proviso that the total amount of the catalyst particle and the support is 100 mass%. The proportion is preferably 5 mass% or more, more preferably 10 mass% or more, from the viewpoint of disposing a lot of active sites on the surface of the support to enhance the performance of the catalyst layer of a fuel cell including the support-type catalyst particle of the present invention, and preferably 70% mass or less, more preferably 60 mass% or less, from the viewpoint of preventing the performance of the catalyst layer of the fuel cell from being deteriorated due to an excessively increased particle size of the support-type catalyst particle.

A catalyst support, particularly a catalyst support known in the art as a catalyst for an electrode for a fuel cell can be used as the support, and examples thereof include conductive carbon particles, metal oxide particles, and metal oxycarbonitride particles, which include particles comprising metals, carbon, nitrogen, and oxygen. Of these, metal oxycarbonitride with or without conductive carbon, which have both a high specific surface area and high stability, are used in the inventive support-type catalyst particles.

Examples of the conductive carbon particles as commercially available products include "CARBON BLACK VULCAN XC-72", "CARBON BLACK VULCAN XC-72R" (manufactured by Cabot), "KETJENBLACK EC600JD", "KETJENBLACK EC300J" (manufactured by Ketjen Black International Company), and SHAWINIGAN BLACK (manufactured by Chevron Chemicals).

The BET specific surface area of the conductive carbon particle is preferably 150 to 2000 $m^2/g$, more preferably

200 to 2000 m$^2$/g, still more preferably 250 to 2000 m$^2$/g.

When the BET specific surface area is 150 m$^2$/g or more, an area where the catalyst particles can be supported is large, and therefore, an enlargement of the catalyst particle can be prevented to allow a catalytic activity to tend to be inhibited from decreasing.

Since vacancies are present in the conductive carbon and the catalyst particles are supported therein, a proton and a fuel gas are sufficiently supplied to the catalyst particles to allow the utilization efficiency of the catalyst to tend to be inhibited from decreasing when the specific surface area is 2000 m$^2$/g or less.

Examples of the metal element of the metal oxide particle or the metal oxycarbonitride particle include the elements of Groups 4, 5, and 14 of the periodic table, and aluminum.

Specific examples of the elements of Groups 4, 5, and 14 of the periodic table include titanium, zirconium, hafnium, niobium, tantalum, vanadium, and tin. From the viewpoint of a cost and the performance of obtained catalyst particles, titanium, zirconium, niobium, and tantalum are preferred, and titanium and niobium are still more preferred.

These may be used singly or in combination of two or more kinds.

Examples of the metal oxide particle include porous particles comprising titanium nitroxide, alumina, silica, or the like. They are semiconductors and do not have a high electrical conductivity but can be used by being blended with carbon particles.

Examples of the metal oxycarbonitride particle include a support for a catalyst comprising a metal oxycarbonitride disclosed in WO 2009/104500. Examples of metals in such a metal oxycarbonitride include titanium, and niobium. When the composition of the metal oxycarbonitride is represented by $MC_xN_yO_z$ (M is a metal element), $0.01 \leq x \leq 2$, $0.01 \leq y \leq 2$, $0.01 \leq z \leq 3$, and $x+y+z \leq 5$ preferably hold. The details of a method for producing the metal oxycarbonitride are described in WO 2009/104500, and examples of the method include a method comprising heat-treating a metal carbonitride in an inert gas containing oxygen at 400 to 1400°C to produce a metal oxycarbonitride.

As the support, these supports may be used singly or in combination of two or more kinds. For example, a support for a catalyst comprising the conductive carbon particle and the metal oxycarbonitride may be used at a ratio of conductive carbon particle: metal oxycarbonitride particle= 9:1 to 1:9 by mass ratio. The mass ratio is preferably conductive carbon particle: metal oxycarbonitride particle= 5:5 to 1:9. When the proportion of the metal oxycarbonitride particles to the conductive particles is increased, the oxygen reduction activity of support-type catalyst particles tends to increase. When the proportion of the metal oxycarbonitride is in the above range, the gas diffusion of MEA in which the catalyst particle is used tends to be improved to enhance a current density. The metal oxycarbonitride particle used in combination with the conductive carbon particle may be replaced by the metal oxide particle.

In addition, a metal oxide and a metal oxycarbonitride exhibit hydrophilicity. Since the presence of water as a conductor for a proton is necessary for generating electricity by a fuel cell, the interior of a cell can be allowed to be in a humidification state to improve power performance by adding a metal oxide particle or a metal oxycarbonitride particle, preferably a metal oxycarbonitride particle, which are hydrophilic, to the conductive carbon particle, which is hydrophobic.

When the metal oxide particle is subjected to powder X-ray diffraction analysis, the crystallite size of the particle, calculated by Scherrer equation: $D = K\lambda/B\cos\theta$, based on a peak with a maximum peak height (D is a crystallite size (nm), the constant K is 0.89, $\lambda$ is the wavelength (nm) of the Cu-K$\alpha$ ray, B is the peak half height width of the peak, and $\theta$ is the diffraction angle (°) of the peak), is preferably 20 to 500 nm. When the catalyst particle in the above range is used as MEA, voids are generated in a catalyst layer due to a difference between the particle diameters of the metal oxide and the conductive carbon, the gas diffusion of a fuel gas is improved, and the power performance can be enhanced. The crystallite size is more preferably 30 to 300 nm, still more preferably 30 to 250 nm, from the viewpoint of effectively utilizing catalyst particles.

The proportion of carbon to a portion obtained by excluding the catalyst particle from the support-type catalyst particle is preferably 50 to 90 mass%.

The BET specific surface area of the support is preferably 20 m$^2$/g or more, more preferably 80 m$^2$/g or more, from the viewpoint of dispersing the catalyst particle and a solid polymer electrolyte mentioned later in the support to obtain the sufficient power performance of a fuel cell, and is preferably 2000 m$^2$/g or less, more preferably 1600 m$^2$/g or less, from the viewpoint of effectively utilizing the catalyst particle and the solid polymer electrolyte mentioned later.

The BET specific surface area of the support-type catalyst particle in which the catalyst particle is supported on the support is preferably 150 to 1000 m$^2$/g, more preferably 200 to 900 m$^2$/g, still more preferably 250 to 800 m$^2$/g, from the viewpoint of the support without enlarging the catalyst particle.

The support may be subjected to various treatments before the catalyst particle is supported, as long as performance is not deteriorated. Examples of such treatments include reduction in unnecessary metal impurities by washing with an acid or an alkali. Acids and alkalis used are not particularly limited. Examples of such acids include hydrochloric acid, sulfuric acid, nitric acid, phosphoric acid, perchloric acid, hydrofluoric acid, hydrobromic acid, acetic acid, chromic acid, hexafluoroantimonic acid, tetrafluoroboric acid, and the like, and examples of such alkalis include sodium hydroxide, potassium hydroxide, aqueous ammonia, and the like. Crushing may also be performed by a ball mill or the like, to reduce a particle size.

<Production Method>

Examples of the method for producing the catalyst particle and the support-type catalyst particle include a production method comprising the step of supporting the catalyst particle on the support.

The step can be carried out by, for example, a step (i) of preparing a dispersion liquid of the support, a step (ii) of adding a platinum compound and a palladium compound or a compound containing platinum and palladium, soluble in the dispersion liquid (hereinafter, the compounds are also collectively referred to as "catalyst particle precursor") to the dispersion liquid, a step (iii) of precipitating a substance containing platinum and palladium in the surface of a support, and a step (iv) of collecting a solid content (i.e., a support having a precipitate on the surface thereof) from the dispersion liquid subjected to the step (iii) to reduce and burn the solid content.

Examples of a dispersion medium used for the dispersion liquid in the step (i) include water; an alcohol such as methanol, ethanol, propanol, isopropanol, butanol, ethylene glycol, and glycerol; and a mixture of water and an alcohol.

Among the catalyst particle precursors used in the step (ii), examples of the compounds containing platinum include $H_2PtCl_6$, $Na_2PtCl_6$, $K_2PtCl_6$, $(NH_4)_2PtCl_6$, $Pt(NO_3)_2$, and $(NH_4)_2PtCl_4$, and examples of the palladium compounds include $PdCl_4$, $PdCl_2$, $(NH_4)_2PdCl_4$, $Na_2PdCl_4$, $Na_2PdCl_2$, $H_2PdCl_4$, and $H_2PdCl_6$. These are examples in which the dispersion medium is water; however, when the dispersion medium is other than water, a soluble compound may be appropriately selected depending on the dispersion medium.

The amount of the added catalyst particle precursor is preferably 0.2 to 2.0 in terms of the total mass of platinum and palladium in the added compound with the proviso that the mass of the support is regarded as 1.

In the step (iii), for example, the pH of the dispersion liquid having undergone the step (ii) may be increased and adjusted to 7 to 11, preferably 8 to 11, to thereby precipitate the substance containing platinum and palladium on the surface of the catalyst particle. This can be carried out by adding an alkaline substance, e.g., aqueous ammonia, $Na_2CO_3$. or NaOH, to the dispersion liquid having undergone the step (ii). Time from the start of the addition of the alkaline substance to the start of the following step (iv) is preferably 2 to 12 hours.

Temperature in the step (i) to the step (iii) is preferably 10 to 90°C. The temperature is preferably kept at a constant level using a water bath or the like.

The dispersion liquid is preferably stirred in the step (i) to the step (iii).

In the step (iv), the solid content (i.e., the support having a precipitate on the surface thereof) can be collected, for example, by filtrating the dispersion liquid subjected to the step (iii). The collected solid content is preferably dried by an oven or the like.

The solid content (or the dried content) is maintained, for example, under reducing gas atmosphere at 100 to 800°C, preferably at 200°C to 600°C, for 10 minutes to 3 hours, to thereby reduce and burn the content. The burning treatment allows the precipitate on the surface of the support to be reduced to form catalyst particles containing platinum and palladium.

Preferred examples of the reducing gas include hydrogen gas, carbon monoxide gas, and the like. The reducing gas may also be a mixed gas of a reducing gas and an inert gas, e.g., a mixed gas of hydrogen gas and nitrogen gas.

The catalyst particle and the support-type catalyst particle according to the present invention can be obtained by having undergone these steps.

The proportion of Pd in the surface of the catalyst particle tends to be increased, for example, by increasing the proportion of Pd in the catalyst particle precursor, by decreasing temperature in the steps (i) to (iii), by decreasing the pH in the step (iii), by shortening time in the step (iii), by increasing the charged ratio of the compound containing Pd in the catalyst particle precursor, and the like.

In the present invention, it is important that the proportion of palladium in the surface of the catalyst particle, measured by XPS, is 45 to 55 atom%. The proportion of palladium in the surface of the catalyst particle can be adjusted by conducting the limited number of experiments for examining the proportion of Pd in the catalyst particle precursor, temperature, pH, time in the step (iii), and the charged ratio of the compound containing Pd in the catalyst particle precursor.

For example, with reference to Table 1, the proportion of palladium in the surface of the catalyst particle increases as in from Comparative Example 11 to Comparative Example 7 when temperature is lowered, as in from Example 2 to Comparative Example 3 when pH is lowered, and as in from Example 1 to Comparative Example 7, and from Comparative Example 7 to Comparative Example 4 when time is shortened.

The proportions of platinum and palladium may be different between the surface and interior of the catalyst particle of the present invention.

[Uses]

The fuel cell catalyst layer according to the present invention comprises the catalyst particle according to the present invention or the support-type catalyst particle in which the catalyst particle is supported.

Fuel cell catalyst layers include anode catalyst layers and cathode catalyst layers. The catalyst particle or the support-type catalyst particle can be used in both layers. The catalyst particle or the support-type catalyst particle is preferably used in a cathode catalyst layer because of having a high oxygen reduction activity. Further, the catalyst particle or the support-type catalyst particle is particularly preferably used in a cathode catalyst layer in a direct methanol fuel cell such as DMFC because of having a low methanol oxidation activity although having a high oxygen reduction activity.

The fuel cell catalyst layer according to the present invention preferably further comprises a polymer electrolyte. The polymer electrolyte is not particularly limited as long as being commonly used in a fuel cell catalyst layer. Specific examples thereof include perfluorocarbon polymers having a sulfonic acid group (e.g., NAFION (registered trademark)), hydrocarbon polymer compounds having a sulfonic acid group, polymer compounds doped with an inorganic acid such as phosphoric acid, organic/inorganic hybrid polymers partially substituted with a proton conductive functional group, and proton conductors composed of a polymer matrix impregnated with a phosphoric acid solution or a sulfuric acid solution. Of these, NAFION is preferable. Examples of sources of NAFION in formation of the fuel cell catalyst layer include a 5% NAFION solution (DE521, DuPont) and the like.

With respect to the content of the polymer electrolyte, the weight proportion of the polymer electrolyte to the catalyst (weight of polymer electrolyte/weight of catalyst) is preferably 0.25 to 1, more preferably 0.3 to 0.9, still more preferably 0.4 to 0.8, from the viewpoint of securing both secure proton conductivity and electron conductivity.

Examples of methods for forming the fuel cell catalyst layer include, but are not particularly limited to, a method comprising applying a suspension containing the support-type catalyst particles and the polymer electrolyte to an electrolyte membrane or a gas diffusion layer and drying the suspension, and a method forming a fuel cell catalyst layer on a base using a suspension containing the support-type catalyst particles and the polymer electrolyte, followed by transferring the fuel cell catalyst layer onto an electrolyte membrane to form a fuel cell catalyst layer.

The electrode according to the present invention comprises the fuel cell catalyst layer and a porous support layer.

The porous support layer is a layer that diffuses gas (hereinafter also referred to as "gas diffusion layer") . The gas diffusion layer may be any gas diffusion layer as long as having electron conductivity, high gas diffusivity, and high corrosion resistance. Carbon-based porous materials such as carbon paper and carbon cloth, and stainless steel and anticorrosive-coated aluminum foils for weight reduction are generally used.

The membrane electrode assembly according to the present invention comprises a cathode, an anode, and an electrolyte membrane placed between the cathode and the anode. In the membrane electrode assembly, the cathode and/or the anode are the electrodes as described above. The anode electrode, the cathode electrode, and the membrane may be pressed with a hot pressing machine in order to decrease a contact resistance generated between the electrode and the electrolyte membrane. For securing gas diffusion and decrease in the contact resistance, the pressure of the hot press is preferably 0.5 MPa to 15 MPa, more preferably 0.5 to 10 MPa, still more preferably 0.5 to 5 MPa. Temperature in the case of the press is preferably 110°C to 150°C, more preferably 120 to 150°C, still more preferably 130 to 150°C. Time of the hot press is not particularly limited but is appropriately determined based on the conventional art.

As the electrolyte membrane, for example, a perfluorosulfonic acid-based electrolyte membrane, a hydrocarbon electrolyte membrane, or the like is generally used, and a membrane in which polymer microporous membrane is impregnated with liquid electrolyte, a membrane in which a porous body is filled with polymer electrolyte, or the like may also be used.

The fuel cell according to the present invention comprises the membrane electrode assembly as described above.

The fuel cell of the present invention according to the present invention can improve the performance of an article, particularly a mobile article, having a fuel cell and equipped with at least one function selected from the group consisting of electricity generating functions, light emitting functions, heat generating functions, sound generating functions, movement functions, display functions, and charging functions. The fuel cell is held preferably on a surface or inside of the article.

Specific examples of the article include architectural structures such as buildings, houses, and tents, illumination equipment such as fluorescent light, LED, organic EL, street light, interior illumination, and traffic light, machinery, automotive devices including vehicles, household appliances, agricultural equipment, electronic devices, mobile information terminals including mobile phones, beauty instruments, portable tools, sanitary goods such as bathroom goods and lavatory goods, furniture, toys, ornaments, bulletin boards, cool boxes, outdoor goods such as exterior generators, teaching materials, artificial flowers, objects, power sources for cardiac pacemakers, and power sources for heaters and coolers equipped with Peltier elements.

Examples

The present invention will be more specifically explained below with reference to examples. However, the present invention is not limited to the examples.

[Measurement Method]

Various measurements were performed by the following method.

1. Amount of Pd in Surface of Catalyst Particle;

The amount of Pd in the surfaces of catalyst particles in support-type catalyst particles (a proportion (atom%) of Pd with respect to a total amount of Pd and Pt) was measured using X-ray photoelectron spectroscopy (hereinafter referred to as "XPS").

An apparatus and conditions used for the measurement are as follows:

(Measurement Apparatus)

Manufacturer: Kratos Analytical/Shimadzu group company Model name: AXIS-NOVA
(Measurement Conditions)
Al monochromator 225 W (15 kV $\times$ 15 mA)
Analysis diameter: 300 $\times$ 700 $\mu$m
Take-off angle: 90°
Charged neutralization condition: 1.5 V
Pass energy: 160 eV, step: 1 eV, retention time: 50 ms, number of sweeps: 4
Bond energy calibration: The C-C peak of C1s spectrum was allowed to be 284.6 eV.

2. Amount of Pd of Catalyst Particles;

The amount of Pd of catalyst particles in support-type catalyst particles (a proportion (atom%) of Pd with respect to a total amount of Pd and Pt) was measured using inductively coupled plasma atomic emission spectroscopy (ICP-AES).

3. Particle Sizes of Catalyst Particles;

Powder X-ray diffraction analysis of samples (support-type catalyst particles) was conducted using ROTAFLEX manufactured by Rigaku Corporation.
The details of measurement conditions are as follows:

X-rays output (Cu-K$\alpha$): 50 kV, 180 mA
Scanning axis: $\theta/2\theta$
Measurement range (2$\theta$): 10.00° to 89.98°
Measurement mode: FT
Reading width: 0.02°
Sampling time: 0.70 sec
DS, SS, RS: 0.5°, 0.5°, 0.15 mm
Goniometer radius: 185 mm

With regard to the counting of diffraction peaks in the powder X-ray diffraction for each sample, a signal that can be detected at a ratio between a signal (S) and a noise (N) (S/N) of 2 or more was regarded as a single peak. The noise (N) was the width of the baseline.
With regard to peaks due to catalyst particles, the peak half height width B (radian) of a diffraction line was determined with a powder X-ray diffraction Rietveld analysis program ("HighScore Plus.", manufacturer: Panalytical. B.V.), and the average value D of crystallite sizes in the direction perpendicular to a crystal plane of the catalyst particles was calculated by the Scherrer equation: $D = K\lambda/B\cos\theta$, wherein the constant K is 0.89, $\lambda$ is the wavelength (nm) of X-ray, and $\theta$ is a diffraction angle (°). Since the catalyst particles are platinum particles with cubic crystals, platinum alloy particles, and the like, the average value of crystallite sizes in the direction perpendicular to (111) crystal plane was adopted as an average particle size.

4. Oxygen Reduction Activity;

Support-type catalyst particles, a Nafion solution (DE521, DuPont) having a concentration of 5 mass%, and water were mixed and subjected to ultrasonic irradiation to prepare a catalyst ink. Onto a disk-shaped glassy carbon electrode (area: 0.196 cm$^2$), 20 $\mu$l of the catalyst ink was dropped and naturally dried to obtain an electrode. The amount of the support-type catalyst particles was adjusted so that the total amount of Pd and Pt on the electrode was 33 $\mu$g/cm$^2$.

Using the electrode as a working electrode, oxygen reduction activity measurement was carried out by a rotating disk electrode (RDE) method under the following conditions:

Reference electrode: reversible hydrogen electrode (RHE) Counter electrode: Pt wire
Electrolytic solution: 0.5 M $H_2SO_4$ aqueous solution (Prior to start of the measurement, the electrolytic solution was saturated with oxygen for 1 hour.)
Rotational speed 600 rpm
Measurement voltage range: 1.1 V to 0.3 V
Scanning speed: 5 mV/s
The obtained data was standardized by the following expression:

$$i_k = (i_d - i) / (i \cdot i_d)$$

wherein $i_k$ is a standardized current density ($\mu$A/cm$^2$), i is a current density ($\mu$A/cm$^2$) at 0.9V, $i_d$ is a diffusion current density ($\mu$A/cm$^2$).
The larger the value of $i_k$ is, the higher the oxygen reduction activity is.

5. Reaction Selectivity;

Oxygen reduction activity measurement was carried out by the same method in "3. Oxygen Reduction Activity" except that the electrolytic solution was changed to an aqueous solution having a sulfuric acid concentration of 0. 5 M and a methanol concentration of 0.05 M.

6. Crystallite Size of Metal Oxide Support

The support was measured by powder XRD, and the crystallite size of the metal oxide support was calculated by Scherrer equation: $D = K\lambda/B\cos\theta$, wherein D is a crystallite size (nm), the constant K is 0.89, and $\lambda$ is the wavelength (nm) of the Cu-K$\alpha$ ray, based on a peak with a maximum peak height. The details of the conditions of the XRD measurement are as described in "3. Particle Sizes of Catalyst particles".

7. BET Specific Surface Area of Support-Type Catalyst Particles

0.15 g of support-type catalyst particles was collected, and its specific surface area measurement was carried out with a fully-automatic BET specific surface area measurement apparatus, MACSORB (manufactured by Mountech Co., Ltd.). The pretreatment time and the pretreatment temperature were set at 30 minutes and 200°C, respectively.

8. Evaluation of Power Performance and Durability of Direct Methanol Fuel Cell;

8.1 Production of Membrane Electrode Assembly

Production of Cathode: The support-type catalyst particles described above, a Nafion solution (DE521, DuPont) having a concentration of 5 mass%, 1-propanol, and water were mixed and subjected to ultrasonic irradiation to prepare a catalyst ink. The weight ratio between Nafion and the catalyst in the catalyst ink was adjusted to be Nafion/catalyst = 0.6. The catalyst ink was applied onto carbon paper (24BC, manufactured by Toray Industries, Inc.) using a spraying machine (manufactured by San-Ei Tech Ltd.) . The amount of the ink used was adjusted so that the amount of an applied noble metal was 1 mg/cm$^2$ on the carbon paper.

Production of Anode: In a manner similar to the above-described method for producing a cathode, a commercially available PtRu/C catalyst (TEC61E54DM, manufactured by Tanaka Kikinzoku Kogyo K.K.) was used and applied onto carbon paper so that the amount of an applied noble metal was 2.9 mg/cm$^2$.

Both surfaces of an electrolyte membrane (Nafion membrane (N212, DuPont)) were sandwiched between two electrodes so that the catalyst layers of the above cathode and anode were internal sides. The surfaces were pressed to produce a membrane electrode assembly. Press conditions were a temperature of 140°C, a pressure of 1 MPa, and a time of 7 minutes.

8.2 Evaluation of Power Performance and Durability of Direct Methanol Fuel Cell

Power performance: The power performance of the cell was evaluated using the membrane electrode assembly produced as described above and a fuel cell unit (manufactured by Eiwa Corporation) with a 1 M aqueous methanol solution as fuel and air as an oxidizing agent. A current density was measured at a cell voltage of 0.4 V, and the power performance was evaluated based on the value of the current density. The higher the power performance of the fuel cell is, the larger the value of the current density is.

Evaluation of Durability: In order to evaluate the durability of a cathode side catalyst, first, a current density at a cell voltage of 0.4 V was measured by the above-described method for measuring a power performance, to regard the current density as an initial performance. Then, air in a cathode side was switched to an inert gas (nitrogen gas), and a potential cycle test in the cathode side was carried out using a potential stat. The performance change of the cathode side catalyst, i.e., the durability of the cathode side catalyst, in the potential cycle test, was evaluated by switching the inert gas in the cathode side to air, measuring the power performance of the cell (current density at a cell voltage of 0.4 V), and comparing the power performance with the above-described initial performance. The above-described potential cycle test was carried out by changing the potential of the cathode between 0.1 V and 0.9 V at a scanning speed of 20 mV/s (i.e., performing a potential scan). The cell performances after starting the above potential cycle test are summarized in Table 2.

8.3 Evaluation of Output Characteristic of Direct Methanol Fuel Cell

The power performance of the cell was evaluated using the produced membrane electrode assembly and a fuel cell unit (manufactured by Eiwa Corporation) with a 1 M aqueous methanol solution as fuel and air as an oxidizing agent in a manner similar to the method described in 8.2. In the evaluation, the maximum value of an output density was measured. The power performances in which the kinds of a support and catalyst particles were changed are summarized in Table 3.

[Production of Catalyst, etc.]

<Production of Support>

[Production Example 1]

Titanium oxycarbonitride (1) was prepared according to Example 5 of International Publication No. WO 2009/104500. In 100 ml of $H_2SO_4$ aqueous solution (30 mass%), 0.8 g of the titanium oxycarbonitride (1) was put, the temperature of the resultant was increased while stirring the resultant, and the resultant was maintained at 80°C for 6 hours, then cooled to room temperature, and filtrated. The obtained solid content was washed with water until the pH of the aqueous dispersion of the solid content becomes 4. The washed solid content was dried in an oven at 80°C for 8 hours or more to obtain a powder (hereinafter also referred to as "TiCNO support (1)"). The BET specific surface area of the TiCNO support (1) (measured by a usual method) was 196 $m^2$/g.

[Production Example 2]

Conductive carbon black (KETJENBLACK EC600JD, manufactured by Ketjen Black International Company, BET = 1270 $m^2$/g) (hereinafter also referred to as "carbon support (1)") and the TiCNO support (1) were mixed at a ratio of carbon support (1): TiCNO support (1)= 70 parts by mass: 30 parts by mass, to obtain a mixture (1). Further, operations were carried out in the same manner as in Production Example 1 except that the titanium oxycarbonitride (1) was changed to the mixture (1), thereby to obtain a powder (hereinafter referred to as "mixed support (1)").

[Production Example 3]

Operations were carried out in the same manner as in Production Example 1 except that the TiCNO support (1) was changed to $TiO_2$ (manufactured by Showa Denko K.K., Grade G1, crystallite diameter of 145 nm) (hereinafter referred to as "$TiO_2$ support (1)") and the carbon support (1) and the $TiO_2$ support (1) were mixed at a ratio of carbon support (1): $TiO_2$ support (1)= 80 parts by mass: 20 parts by mass, thereby to obtain a powder (hereinafter referred to as "mixed support (2)").

[Production Example 4]

Operations were carried out in the same manner as in Production Example 1 except that the TiCNO support (1) was changed to $TiO_2$ (manufactured by ISHIHARA SANGYO KAISHA, LTD., ST-01, crystallite diameter of 7 nm) (hereinafter referred to as "$TiO_2$ support (2)") and the carbon support (1) and the $TiO_2$ support (2) were mixed at a ratio of carbon support (1): $TiO_2$ support (2)= 80 parts by mass: 20 parts by mass, thereby to obtain a powder (hereinafter referred to as "mixed support (3)").

[Production Example 5]

Operation were carried out in the same manner as in Production Example 2 except that the carbon support (1) was changed to a multilayered carbon nanotube (VGCF-H, manufactured by Showa Denko K.K., BET specific surface area of 13 $m^2$/g), thereby to obtain a powder (hereinafter referred to as "mixed support (4)").

<Production of Support-Type Catalyst Particles>

[Example 1]

To 500 mL of water, 0.4 g of mixed support powder (1) as a support powder was added and stirred in a water bath at 40°C for 30 minutes. To the resultant dispersion liquid, 56.6 ml of aqueous solution of $(NH_4)_2PdCl_4$ (concentration of Pd: 0.19 mass%) and 103.1 ml of aqueous solution of $H_2PtCl_6$ (concentration of Pt: 0.19 mass%) were added and stirred in a water bath at 40°C for 6 hours. The pH of the dispersion liquid was maintained at 9 by adding an aqueous solution of $Na_2CO_3$ (concentration: 4.2 mass%) during the addition operation and the stirring operation. Hereinafter, temperature, time, and pH during the stirring operation are collectively referred to as "support condition".

The resultant dispersion liquid was left standing to cool to room temperature (25°C) and thereafter filtrated, and the resultant solid was then dried in an oven at 80°C for 12 hours. The resultant dried content was ground in a mortar and burned in a quartz furnace in atmosphere of a mixed gas of nitrogen gas and hydrogen gas (concentration of hydrogen gas: 4% by volume) at 300°C for 2 hours to obtain support-type catalyst particles in which catalyst particles comprising Pd and Pt are supported. The evaluation results of the support-type catalyst particles are listed in Table 1 and 2.

[Examples 2 to 5, Comparative Examples 1 to 11]

In Example 1, the production conditions were changed as listed in Table 1, to produce support-type catalyst particles. The evaluation results of each obtained support-type catalyst particle are listed in Table 1. Example 4 is outside the scope of the claims.

[Example 6]

Operations were carried out in the same manner as in Example 1, thereby to produce support-type catalyst particles. The obtained support-type catalyst particles were evaluated by the evaluation method described in 6.3.

[Example 7]

Operations were carried out in the same manner as in Example 1 except that the temperature of the water bath during supporting was 80°C, thereby to produce support-type catalyst particles. The obtained support-type catalyst particles were evaluated by the evaluation method described in 6.3.

[Examples 8 to 12]

In Example 1, the kind and mixing ratio of the catalyst support were changed as listed in Table 3, a mixed support was produced, and support-type catalyst particles were obtained. The obtained support-type catalyst particles were evaluated by the evaluation method described in 6.3.

[Example 13]

To 500 mL of water, 0.4 g of mixed support powder (1) as a support powder was added and stirred in a water bath at 40°C for 30 minutes. To the resultant dispersion liquid, 56.6 ml of aqueous solution of $(NH_4)_2PdCl_4$ (concentration of Pd: 0.19 mass%) was put and stirred in a water bath for 2 hours. Then, 103.1 ml of aqueous solution of $H_2PtCl_6$

(concentration of Pt: 0.19 mass%) was added and stirred in the water bath at 40°C for 4 hours. The pH of the dispersion liquid was maintained at 9 by adding an aqueous solution of $Na_2CO_3$ (concentration: 4.2 mass%) during the addition operation and the stirring operation. Operations were carried out in the same manner as in Example 1 except that the dispersion liquid was prepared in such a manner, thereby to produce support-type catalyst particles. The obtained support-type catalyst particles were evaluated by the evaluation method described in 6.3.

[Comparative Example 12]

Operations were carried out in the same manner as in Example 1 except that the Pd aqueous solution was changed to 41.3 ml of $RuCl_3$ aqueous solution (concentration of Ru: 0.19 mass%), thereby to produce support-type catalyst particles. The obtained support-type catalyst particles were evaluated by the evaluation method described in 6.3.

The evaluation results of Examples 6 to 13 and Comparative Example 12 as described above are collectively listed in Table 3.

Figure 1 reveals that specifically high oxygen reduction activities are exhibited in Examples 1 to 5 in which the proportion of palladium is 45 to 55 atom% although the oxygen reduction activity of the catalyst particles comprising platinum and palladium tended to be decreased with increasing the proportion of palladium in the surface of the catalyst particles. In contrast, no specific correlations between the support for a catalyst, the support conditions such as pH, temperature, and time, a particle size, or a weight ratio and the oxygen reduction activity are observed. Thus, in the present invention, it can be confirmed that the oxygen reduction activity is determined by the proportion of palladium in the surface of the catalyst particles with higher priority than the support conditions and the characteristics of the catalyst particles.

The proportion of palladium in the catalyst particle precursor differs from the proportion of palladium in the surface of the catalyst particles, and therefore, it is considered that a gradient is generated in the distribution of palladium in the catalyst particles. Although the details are unknown, the oxygen reduction activity can be affected by generation of such an appropriate gradient.

With reference to Figure 2, an oxygen reduction activity is greatly decreased to about 1/20 in the case where methanol is present in an aqueous sulfuric acid solution, compared to the case where methanol is not present in the aqueous sulfuric acid solution, in Comparative Example 6, while an oxygen reduction activity is maintained in around 1/2 even in the case where methanol is present in Example 1. Thus, it is understood that the energy efficiency of the cell can be maintained since the methanol oxidation activity of the catalyst of Example 1 is lower than that of the catalyst of Comparative Example 6.

Thus, it can be confirmed that the catalyst of Example 1 has a merit for use as a cathode for a direct methanol fuel cell because of having a lower methanol oxidation activity than, while having a slightly inferior oxygen reduction activity to, those of Comparative Example 6, in which platinum is 100%, under a condition in which methanol is not present.

With reference to Table 2, it was confirmed that the performances in the case of the catalysts of Example 1 and Comparative Example 6 were improved for 22 hours after the start of potential scanning. It is considered that the improvement of the performances was caused by the activation of the catalysts in the potential cycle test. After a lapse of 22 hours from the start of potential scanning, cell performance was decreased with time in the case of the catalyst of Comparative Example 6 while no decrease in cell performance was confirmed in Example 1. Thus, it can be confirmed that the support-type catalyst of the present invention has high electricity generation stability.

With reference to Table 1, while a current density as an index for the oxygen reduction activity of the catalyst of Example 1 was lower than the current density in the case of the catalyst of Comparative Example 6, consisting of Pt, the power performance of the actual direct methanol cell in Example 1 was higher than that in Comparative Example 6. Thus, it can be confirmed that the support-type catalyst of the present invention is little influenced by methanol crossing over from the anode side of the direct methanol fuel cell, and can maintain a high oxygen reduction activity, since having a low methanol oxidation activity.

Based on the above, it was confirmed that a direct methanol fuel cell of which both power performance and durability are high is obtained by using the catalyst of the present invention.

With reference to Table 3, in comparison between Example 6 and Example 13, the maximum output density is decreased in Example 13 in which the difference between the proportion of Pd in the catalyst particles and the proportion of Pd in the surface is high. Thus, it can be considered that not only the proportion in the surface of the catalyst particles but also the internal alloy composition is important for a catalytic activity.

With reference to Table 3, in comparison between Example 8 and Example 9, the output density exhibited in Example 8 using the mixed support in which the metal oxide having a crystallite size of 30 nm or more was added to the carbon support is higher than that in Example 9 using the mixture support in which the metal oxide having a crystallite size of less than 30 nm was added. In comparison between Examples 6 to 8 and Examples 10 and 11, the output density exhibited in each of Examples 6 to 8 in which the mixed support was used is higher than that in Example 10 or 11 in which the single support was used. It is known that, in general, the maximum output density represents a characteristic in a high current density region and is greatly influenced by fuel gas diffusivity. The exhibition of the high maximum output densities on the mixed supports described in Examples 6 to 8 is considered to be caused by generating voids in the catalyst layer due to the difference between the particle diameters of the metal oxide or metal oxycarbonitride and the conductive carbon, to improve the fuel gas diffusivity and to facilitate the oxygen reduction reaction.

Table 1

| | Support (conductive particles) | Production Conditions | | | | | | | Support conditions | | |
|---|---|---|---|---|---|---|---|---|---|---|---|
| | | Catalyst particle precursor | | | | | | | | | |
| | Kind | Amount of $(NH_4)_2PdCl_4$ solution (Pd concentration: 0.19 wt%) (ml) | Amount of Pd in $(NH_4)_2PdCl_4$ solution (Pd concentration: 0.19 wt%) (g) | Charged amount of Pd (mmol) | Amount of $H_2PtCl_6$ solution (Pt concentration: 0.19 wt%) (ml) | Amount of Pt in $H_2PtCl_6$ solution (Pt concentration: 0.19 wt%) (g) | Charged amount of Pt (mmol) | Proportion of Pd in catalyst particle precursor (atom%) | Temperature (°C) | Time (hr) | pH |
| Example 1 | Mixed support (1) | 56.6 | 0.11 | 1.01 | 103.1 | 0.20 | 1.00 | 50.17 | 40 | 6 | 9 |
| Example 2 | TiCNO support (1) | 16.0 | 0.03 | 0.29 | 29.5 | 0.06 | 0.29 | 49.86 | 40 | 6 | 10 |
| Example 3 | Mixed support (1) | 83.6 | 0.16 | 1.49 | 76.2 | 0.14 | 0.74 | 66.80 | 60 | 3 | 9 |
| Example 4 | Carbon support (1) | 56.6 | 0.11 | 1.01 | 103.1 | 0.20 | 1.00 | 50.17 | 40 | 6 | 9 |
| Example 5 | Mixed support (1) | 87.4 | 0.17 | 1.56 | 72.4 | 0.14 | 0.71 | 68.88 | 60 | 6 | 9 |
| Comp. Ex. 1 | Mixed support (1) | 56.6 | 0.11 | 1.01 | 103.1 | 0.20 | 1.00 | 50.17 | 50 | 3 | 9 |
| Comp. Ex. 2 | Mixed support (1) | 8.3 | 0.02 | 0.15 | 151 | 0.29 | 1.47 | 9.16 | 40 | 6 | 9 |
| Comp. Ex. 3 | TiCNO support (1) | 16.0 | 0.03 | 0.29 | 29.5 | 0.06 | 0.29 | 49.86 | 40 | 6 | 7 |
| Comp. Ex. 4 | Mixed support (1) | 56.6 | 0.11 | 1.01 | 103.1 | 0.20 | 1.00 | 50.17 | 40 | 2 | 9 |
| Comp. Ex. 5 | Mixed support (1) | 160.3 | 0.30 | 2.86 | 0 | 0.00 | 0.00 | 100.00 | 40 | 6 | 9 |
| Comp. Ex. 6 | Mixed support (1) | 0 | 0.00 | 0.00 | 159.3 | 0.30 | 1.55 | 0.00 | 40 | 6 | 9 |
| Comp. Ex. 7 | Mixed support (1) | 56.6 | 0.11 | 1.01 | 103.1 | 0.20 | 1.00 | 50.17 | 40 | 3 | 9 |
| Comp. Ex. 8 | Mixed support (1) | 56.6 | 0.11 | 1.01 | 123.7 | 0.24 | 1.20 | 45.62 | 40 | 3 | 9 |
| Comp. Ex. 9 | Mixed support (1) | 56.6 | 0.11 | 1.01 | 154.6 | 0.29 | 1.51 | 40.17 | 40 | 3 | 9 |
| Comp. Ex. 10 | Mixed support(10) | 15.8 | 0.03 | 0.28 | 143.6 | 0.27 | 1.40 | 16.79 | 40 | 6 | 9 |
| Comp. Ex. 11 | Mixed support(11) | 56.6 | 0.11 | 1.01 | 103.1 | 0.20 | 1.00 | 50.17 | 60 | 6 | 9 |

Weight proportion*: Content of catalyst particles with the proviso that the total amount of the catalyst particles and conductive particles is 100 mass%

Table 1 (Continuation)

| | Physical properties of supported catalyst particles | | | | | Oxygen reduction activity |
|---|---|---|---|---|---|---|
| | Proportion of Pd in catalyst particle surface (atom%) | Weight proportion* (mass%) | Particle size of catalyst particle (nm) | Proportion of Pd contained in catalyst particle (atom%) | (Proportion of Pd contained in catalyst particle) − (proportion of Pd in catalyst particle surface) (atom%) | Current density ($i_k$@0.9 V) |
| Example 1 | 50 | 49.5 | 5.8 | 58 | 8 | 0.19 |
| Example 2 | 54 | 14.9 | 10.5 | 65 | 11 | 0.19 |
| Example 3 | 47 | 50.4 | 10.6 | 58 | 11 | 0.19 |
| Example 4 | 49 | 52.3 | 6.3 | 57 | 8 | 0.17 |
| Example 5 | 53 | 51 | 5.9 | 61 | 8 | 0.19 |
| Comp. Ex. 1 | 40 | 52.7 | 12.1 | 56 | 16 | 0.11 |
| Comp. Ex. 2 | 26 | 20.9 | 8.5 | 40 | 14 | 0.14 |
| Comp. Ex. 3 | 61 | 20.9 | 13.5 | 65 | 4 | 0.09 |
| Comp. Ex. 4 | 69 | 37.7 | 11.2 | 70 | 1 | 0.07 |
| Comp. Ex. 5 | 100 | 32.8 | 11.5 | 100 | 0 | 0.04 |
| Comp. Ex. 6 | 0 | 8.9 | 5.7 | 0 | 0 | 0.24 |
| Comp. Ex. 7 | 56 | 48.2 | 12.6 | 61 | 5 | 0.10 |
| Comp. Ex. 8 | 59 | 49.2 | 10.6 | 63 | 4 | 0.13 |
| Comp. Ex. 9 | 56 | 50.6 | 11.5 | 62 | 6 | 0.13 |
| Comp. Ex. 10 | 31 | 29.6 | 10.1 | 46 | 15 | 0.14 |
| Comp. Ex. 11 | 44 | 52 | 6.5 | 54 | 10 | 0.11 |

Table 2 Current Density at Cell Voltage of 0.4 V after Start of Evaluation of Durability

| Potential Scan Time (hr) | Current Density (mA/cm$^2$) at Voltage of 0.4 V | |
|---|---|---|
| | Example 1 | Comparative Example 6 |
| 0 | 116 | 118 |
| 22 | 166 | 162 |

(continued)

| | | |
|---|---|---|
| 44 | 169 | 160 |
| 89 | 169 | 156 |
| 133 | 169 | 152 |

Table 3 Relationship between Succort/Catalyst Particles and Power Performance

| | Support | Mixing ratio (mass%) of support | | | | Proportion of Pd in catalyst particle surface (atom%) | Weight proportion* (mass%) | Proportion of Pd contained in catalyst particles (atom%) | (Proportion of Pd contained in catalyst particles) - (proportion of Pd in catalyst particle surface) (atom%) | Crystallite size of metal oxide support (nm) | BET specific surface area of support-type catalyst particles ($m^2g^{-1}$) | Maximum output density ($mWcm^{-2}$) |
|---|---|---|---|---|---|---|---|---|---|---|---|---|
| | | TiCNO | $TiO_2$ | VGCF | EC600JD | | | | | | | |
| Example 6 | Mixed support (1) | 30 | | | 70 | 50 | 49.1 | 58 | 8 | - | 485 | 65.9 |
| Example 7 | Mixed support (1) | 30 | | | 70 | 54 | 55.6 | 55 | 1 | - | 423 | 62.7 |
| Example 8 | Mixed support (2) | | 20 (G1) | | 80 | 55 | 50.1 | 59 | 4 | 145 | 508 | 61.1 |
| Example 9 | Mixed support (3) | | 20 (ST01) | | 80 | 52 | 49.3 | 59 | 7 | 7 | 546 | 49.3 |
| Example 10 | TiCNO support (1) | 100 | | | | 54 | 14.9 | 58 | 4 | - | 181 | 25.8 |
| Example 11 | Carbon support (1) | | | | 100 | 49 | 52.3 | 57 | 8 | - | 606 | 59.9 |
| Example 12 | Mixed support (4) | 30 | | 70 | | 50 | 11.2 | 57 | 7 | - | 65 | 25.1 |
| Example 13 | Mixed support (1) | 30 | | | 70 | 45 | 45.4 | 72 | 27 | - | 475 | 58.7 |

18

EP 3 006 106 B1

(continued)

| | Support | Mixing ratio (mass%) of support | | | | Proportion of Pd in catalyst particle surface (atom%) | Weight proportion* (mass%) | Proportion of Pd contained in catalyst particles (atom%) | (Proportion of Pd contained in catalyst particles) - (proportion of Pd in catalyst particle surface) (atom%) | Crystallite size of metal oxide support (nm) | BET specific surface area of support-type catalyst particles ($m^2g^{-1}$) | Maximum output density ($mWcm^{-2}$) |
|---|---|---|---|---|---|---|---|---|---|---|---|---|
| | | TiCNO | $TiO_2$ | VGCF | EC600JD | | | | | | | |
| Comp. Ex. 12 | PtRu/ Mixed support (1) | 30 | | | 70 | 48 (Ru) | 49.5 | 54 (Ru) | 6 (Ru) | - | 481 | 35.1 |

Weight proportion*: Content of catalyst particles with the proviso that the total amount of the catalyst particles and conductive particles is 100 mass%

**Claims**

1. A support-type catalyst particle comprising a catalyst particle and a support on which the catalyst particle is supported, wherein the catalyst particle comprises platinum and palladium, and has a proportion of palladium in the surface of the particle, measured by X-ray photoelectron spectroscopy (XPS), of 45 to 55 atom% with respect to a total amount of platinum and palladium of 100 atom%, and wherein the support comprises a metal oxycarbonitride, and preferably a metal oxycarbonitride and a conductive carbon.

2. The support-type catalyst particle according to claim 1, wherein the catalyst particle has a value of 25 atom% or less, the value obtained by subtracting the proportion (atom%) of palladium in the surface of the catalyst particle from a proportion (atom%) of palladium contained in the catalyst particle, as measured by inductively coupled plasma atomic emission spectroscopy (ICP-AES), with respect to a total amount of platinum and palladium, contained in the catalyst particle, of 100 atom%.

3. The support-type catalyst particle according to claim 1 or 2, wherein an average particle size of the catalyst particle is 1 to 20 nm.

4. The support-type catalyst particle according to claim 1, wherein the content of the catalyst particle is 1 to 80 mass% with respect to a total amount of the catalyst particle and the support of 100 mass%.

5. The support-type catalyst particle according to claim 1, wherein $0.01 \leq x \leq 2$, $0.01 \leq y \leq 2$, and $0.01 \leq z \leq 3$ hold when the composition of the metal oxycarbonitride is represented by $MC_xN_yO_z$, wherein M is a metal element.

6. The support-type catalyst particle according to claim 1 or 5, wherein the metal oxycarbonitride is a titanium oxycarbonitride.

7. The support-type catalyst particle according to any one of claims 1 to 5, wherein the conductive carbon has a BET specific surface area of 150 to 2000 $m^2/g$.

8. The support-type catalyst particle according to any one of claims 1 to 7, having a proportion of a conductive carbon to a portion of 50 to 90 mass%, the portion obtained by excluding the catalyst particle from the support-type catalyst particle.

9. The support-type catalyst particle according to any one of claims 1 to 8, which is a cathode catalyst for a fuel cell.

10. A fuel cell catalyst layer comprising the support-type catalyst particle according to any one of claims 1 to 9.

11. An electrode comprising the fuel cell catalyst layer according to claim 10 and a porous support layer.

12. A membrane electrode assembly comprising a cathode, an anode, and an electrolyte membrane placed between the cathode and the anode, wherein the cathode is the electrode according to claim 11.

13. A fuel cell comprising the membrane electrode assembly according to claim 12.

14. The fuel cell according to claim 13, which is a polymer electrolyte fuel cell.

15. The fuel cell according to claim 14, which is a direct liquid fuel cell.

16. The fuel cell according to claim 15, which is a direct methanol fuel cell.

17. An article with at least one function selected from the group consisting of electricity generating functions, light emitting functions, heat generating functions, sound generating functions, movement functions, display functions, and charging functions, the article comprising the fuel cell according to any one of claims 13 to 16.

**Patentansprüche**

1. Katalysatorteilchen vom Trägertyp, umfassend ein Katalysatorteilchen und einen Träger, auf dem das Katalysatorteilchen aufgebracht ist, wobei das Katalysatorteilchen Platin und Palladium umfasst und einen durch Röntgenphotoelektronenspektroskopie (XPS) gemessenen Anteil von Palladium in der Oberfläche des Teilchens von 45 bis 55 Atom-%, bezogen auf eine Gesamtmenge von Platin und Palladium von 100 Atom-% aufweist, und wobei der Träger mindestens ein Metalloxycarbonitrid und vorzugsweise ein Metalloxycarbonitrid und einen leitfähigen Kohlenstoff umfasst.

2. Katalysatorteilchen vom Trägertyp nach Anspruch 1, wobei das Katalysatorteilchen einen Wert von 25 Atom-% oder weniger aufweist, wobei der Wert erhalten wird durch Subtrahieren des Anteils (Atom-%) von Palladium in der Oberfläche des Katalysatorteilchens von einem durch Atomemissionsspektroskopie mit induktiv gekoppeltem Plasma (ICP-AES) gemessenen Anteil (Atom-%) von in dem Katalysatorteilchen enthaltenen Palladium, bezogen auf eine Gesamtmenge von die in dem Katalysatorteilchen enthaltenen Platin und Palladium von 100 Atom-%.

3. Katalysatorteilchen vom Trägertyp nach Anspruch 1 oder 2, wobei die mittlere Teilchengröße des Katalysatorteilchens 1 bis 20 nm beträgt.

4. Katalysatorteilchen vom Trägertyp nach Anspruch 1, wobei der Gehalt des Katalysatorteilchens 1 bis 80 Masse-% in Bezug auf die Gesamtmenge des Katalysatorteilchens und des Trägers von 100 Masse-% beträgt.

5. Katalysatorteilchen vom Trägertyp nach Anspruch 1, wobei $0{,}01 \leq x \leq 2$, $0{,}01 \leq y \leq 2$ und $0{,}01 \leq z \leq 3$ gilt, wenn die Zusammensetzung des Metalloxycarbonitrids durch $MC_xN_yO_z$ repräsentiert wird, wobei M ein Metallelement ist.

6. Katalysatorteilchen vom Trägertyp nach Anspruch 1 oder 5, wobei das Metalloxycarbonitrid ein Titanoxycarbonitrid ist.

7. Katalysatorteilchen vom Trägertyp nach einem der Ansprüche 1 bis 5, wobei der leitfähige Kohlenstoff eine spezifische BET-Oberfläche von 150 bis 2000 m$^2$/g aufweist.

8. Katalysatorteilchen vom Trägertyp nach einem der Ansprüche 1 bis 7 mit einem Prozentsatz eines leitfähigen Kohlenstoffs zu einem Anteil von 50 bis 90 Masse-%, wobei der Anteil durch Ausschließen des Katalysatorteilchens von dem Katalysatorteilchen vom Trägertyp erhalten wird.

9. Katalysatorteilchen vom Trägertyp nach einem der Ansprüche 1 bis 8, der ein Kathodenkatalysator für eine Brennstoffzelle ist.

10. Brennstoffzellen-Katalysatorschicht, umfassend das Katalysatorteilchen vom Trägertyp nach einem der Ansprüche 1 bis 9.

11. Elektrode, umfassend die Brennstoffzellen-Katalysatorschicht gemäß Anspruch 10 und eine poröse Trägerschicht.

12. Membranelektrodenanordnung mit einer Kathode, einer Anode und einer zwischen der Kathode und der Anode angeordneten Elektrolytmembran, wobei die Kathode die Elektrode gemäß Anspruch 11 ist.

13. Brennstoffzelle, umfassend die Membranelektrodenanordnung nach Anspruch 12.

14. Brennstoffzelle nach Anspruch 13, die eine Polymerelektrolytbrennstoffzelle ist.

15. Brennstoffzelle nach Anspruch 14, die eine direkte Flüssigbrennstoffzelle ist.

16. Brennstoffzelle nach Anspruch 15, die eine Direkt-Methanol-Brennstoffzelle ist.

17. Gegenstand mit mindestens einer aus der Gruppe ausgewählten Funktion, die aus Elektrizitätserzeugungsfunktionen, Lichtemissionsfunktionen, Wärmeerzeugungsfunktionen, Geräuscherzeugungsfunktionen, Bewegungsfunktionen, Anzeigefunktionen und Ladefunktionen besteht, wobei der Gegenstand die Brennstoffzelle nach einem der Ansprüche 13 bis 16 aufweist.

**Revendications**

1. Particule de catalyseur de type à support comprenant une particule de catalyseur et un support sur lequel la particule de catalyseur est supportée, dans laquelle la particule de catalyseur comprend du platine et du palladium, et a une proportion de palladium dans la surface de la particule, mesurée par spectroscopie photoélectronique des rayons X (XPS), de 45 à 55 % par atome par rapport à une quantité totale de platine et de palladium de 100 % par atome, et dans laquelle le support comprend un oxycarbonitrure de métal, et de préférence un oxycarbonitrure de métal et un carbone conducteur.

2. Particule de catalyseur de type à support selon la revendication 1, dans laquelle la particule de catalyseur a une valeur de 25 % par atome ou moins, la valeur étant obtenue en soustrayant la proportion (% par atome) de palladium dans la surface de la particule de catalyseur d'une proportion (% par atome) de palladium contenue dans la particule de catalyseur, telles que mesurées par spectrométrie d'émission atomique à plasma à couplage inductif (ICP-AES), par rapport à une quantité totale de platine et de palladium, contenue dans la particule de catalyseur, de 100 % par atome.

3. Particule de catalyseur de type à support selon la revendication 1 ou 2, dans laquelle une taille moyenne de particule de la particule de catalyseur est de 1 à 20 nm.

4. Particule de catalyseur de type à support selon la revendication 1, dans laquelle la teneur de la particule de catalyseur est de 1 à 80 % en masse par rapport à une quantité totale de la particule de catalyseur et du support de 100 % en masse.

5. Particule de catalyseur de type à support selon la revendication 1, dans laquelle $0{,}01 \leq x \leq 2$, $0{,}01 \leq y \leq 2$ et $0{,}01 \leq z \leq 3$ sont satisfaites lorsque la composition de l'oxycarbonitrure de métal est représentée par $MC_xN_yO_z$, dans laquelle M est un élément métallique.

6. Particule de catalyseur de type à support selon la revendication 1 ou 5, dans laquelle l'oxycarbonitrure de métal est un oxycarbonitrure de titane.

7. Particule de catalyseur de type à support selon l'une quelconque des revendications 1 à 5, dans laquelle le carbone conducteur a une surface spécifique BET de 150 à 2 000 $m^2$/g.

8. Particule de catalyseur de type à support selon l'une quelconque des revendications 1 à 7, ayant une proportion d'un carbone conducteur à un pourcentage de 50 à 90 % en masse, le pourcentage obtenu en excluant la particule de catalyseur de la particule de catalyseur de type à support.

9. Particule de catalyseur de type à support selon l'une quelconque des revendications 1 à 8, qui est un catalyseur de cathode pour une pile à combustible.

10. Couche de catalyseur pour pile à combustible comprenant la particule de catalyseur de type à support selon l'une quelconque des revendications 1 à 9.

11. Électrode comprenant la couche de catalyseur pour pile à combustible selon la revendication 10 et une couche de support poreuse.

12. Ensemble électrode à membrane comprenant une cathode, une anode et une membrane électrolytique placée entre la cathode et l'anode, dans laquelle la cathode est l'électrode selon la revendication 11.

13. Pile à combustible comprenant l'ensemble électrode à membrane selon la revendication 12.

14. Pile à combustible selon la revendication 13, qui est une pile à combustible à électrolyte polymère.

15. Pile à combustible selon la revendication 14, qui est une pile directe à combustible liquide.

16. Pile à combustible selon la revendication 15, qui est une pile directe à combustible au méthanol.

17. Article ayant au moins une fonction choisie dans le groupe constitué des fonctions de génération d'électricité, des fonctions d'émission de lumière, des fonctions de génération de chaleur, des fonctions de génération de son, des fonctions de déplacement, des fonctions d'affichage et des fonctions de charge, l'article comprenant la pile à combustible selon l'une quelconque des revendications 13 à 16.

[Fig. 1]

ORR Performance vs. Surface Pd amount (XPS)

[Fig. 2]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040161641 A
- JP 2010536548 A
- JP 2006092957 A
- JP 2006079840 A
- JP 2003226901 A
- JP 2008027918 A
- WO 2012098712 A1
- WO 2009104500 A

**Non-patent literature cited in the description**

- **KADIRGAN et al.** *INTERNATIONAL JOURNAL OF HYDROGEN ENERGY,* 2009, vol. 34, 4312-4320